# EUROPEAN PATENT APPLICATION

(11) **EP 4 693 576 A1**
(43) Date of publication of application: **11.02.2026**
(21) Application number: 24894586.7
(22) Date of filing: 20.11.2024
(51) Int. Cl.: H01M 10/058, H01M 10/04, H01M 10/052

(54) **BATTERY CELL MANUFACTURING METHOD**

(30) Priority: 23.11.2023 KR 20230164672; 18.11.2024 KR 20240163999
(71) Applicant: LG Energy Solution, Ltd., Seoul 07335 (KR)
(72) Inventor: LEE, Sangkyun, Daejeon 34122 (KR); KIM, Ki Tae, Daejeon 34122 (KR); LEE, Younghwan, Daejeon 34122 (KR); PARK, Tae Jin, Daejeon 34122 (KR); HO, Changwon, Daejeon 34122 (KR); CHANDRA, Christian, Daejeon 34122 (KR)
(74) Representative: Goddar, Heinz J.
(86) International application number: PCT/KR2024/018353
(87) International publication number: WO 2025/110694

(57) **Abstract**

A battery cell manufacturing method according to an embodiment of the present disclosure comprises: a battery cell assembling step of mounting an electrode assembly in a housing section of a battery case, with the electrode assembly comprising a positive electrode, a positive electrode, and a separator interposed between the positive electrode and the negative electrode; a pre-aging step of storing the battery cell at a first temperature; a first formation step of charging and discharging the battery cell; a second formation step of only pressing the charged and discharged battery cell; and an aging step of storing the pressed battery cell at a second temperature, wherein the second temperature is in a range equal to or higher than the first temperature.

## Description

### [TECHNICAL FIELD]

### Cross-Reference to Related Application(s)

This application claims priority to and the benefit of Korean Patent Application No. 10-2023-0164672, filed on November 23, 2023, and Korean Patent Application No. 10-2024-0163999, filed on November 18, 2024, with the Korean Intellectual Property Office, the disclosures of which are incorporated herein by reference in their entirety.

The present disclosure relates to a battery cell manufacturing method, and more particularly, to a battery cell manufacturing method that prevents a bending phenomenon of the battery cell without requiring a separate manual press process.

### [BACKGROUND]

As technical developments and demands on mobile devices are increasing, demands on secondary batteries as an energy source is being rapidly increasing. Among the secondary batteries, lithium secondary batteries having high energy density and voltage, long cycle life, and low self-discharge rate are commercialized and widely used.

Based on the shape of a battery case, a secondary battery may be classified into a cylindrical battery where an electrode assembly is built into a cylindrical metal container, a prismatic battery where an electrode assembly is built into a prismatic metal container, or a pouch type battery where an electrode assembly is built into a pouch-shaped case made of an aluminum laminate sheet. Here, the electrode assembly built into in the battery case serves as a power generating element capable of charging/discharging and including a stacked structure of a positive electrode, a negative electrode and a separator interposed between the positive electrode and the negative electrode. The electrode assembly may be classified into jelly-roll types formed by interposing a separator between a long sheet type positive electrode and a long sheet type negative electrode and winding them, and stacked types formed by sequentially stacking a plurality of positive electrodes and negative electrodes with separators being interposed between the positive electrode and the negative electrode.

Among these, particularly, the usage of a pouch-type battery having a structure in which such a stacked type or stacked/folded type electrode assembly is built into in a pouch-shaped battery case made of an aluminum laminate sheet has gradually increased because of low manufacturing costs, light weight, easy modification in shape, etc.

In manufacturing such pouch-type secondary batteries, if the wet adhesion force at an interface between the separator and the electrode is uneven, a cell bending phenomenon may occur after the activation process. Here, the cell bending phenomenon may mean a phenomenon in which the battery cell is bent in a predetermined direction. A battery cell in which such a cell bending phenomenon occurs may cause problems such as cell transport failure in the subsequent battery cell manufacturing process.

Thus, in order to solve the cell bending phenomenon, it was previously necessary to perform a manual press process for manually pressing the battery cells after the battery cell manufacturing process or to perform a separate press process such as a rolling press. However, when a separate press process is performed on a battery cell in which the cell bending phenomenon has already occurred, it is difficult to completely restore the battery cell in which the cell bending phenomenon has occurred to its original state, and a problem of a decrease in process efficiency resulting from performing a separate press process arises.

Therefore, there is a need to develop a battery cell manufacturing method that can prevent a bending phenomenon of battery cell without requiring a separate manual press process.

### [DETAILED DESCRIPTION OF THE INVENTION]

### [Technical Problem]

It is an object of the present disclosure to provide a battery cell manufacturing method that prevents a bending phenomenon of the battery cell without requiring a separate manual press process.

The technical objects to be solved by the embodiments of the present disclosure are not limited to those disclosed above, and other objects which are not mentioned herein should be clearly understood by those skilled in the art from the following description and the accompanying drawing.

### [Technical Solution]

According to an embodiment of the present disclosure, there is provided a battery cell manufacturing method, comprising: a battery cell assembling step of mounting an electrode assembly in a housing section of a battery case, with the electrode assembly comprising a positive electrode, a positive electrode, and a separator interposed between the positive electrode and the negative electrode; a pre-aging step of storing the battery cell at a first temperature; a first formation step of charging and discharging the battery cell; a second formation step of only pressing the charged and discharged battery cell; and an aging step of storing the pressed battery cell at a second temperature, wherein the second temperature is in a range equal to or higher than the first temperature.

The second formation step may be performed under a pressure of 1 kgf/cm² or more and 10 kgf/cm² or less.

The second formation step may be performed at a temperature equal to or higher than the temperature of the first formation step.

The first formation step and the second formation step may be performed at a temperature of 30 degrees Celsius or more and 80 degrees Celsius or less.

The second formation step may be performed at a temperature higher than that of the first formation step.

The first formation step may be performed in a state where the battery cell is pressed, and the second formation step may be performed under a pressure equal to or higher than the pressure of the first formation step.

The first formation step may be performed in a state where the battery cell is located between a pair of jigs, and the upper and lower parts of the battery cell are pressed by the pair of jigs.

The second formation step may be performed in a state where the pressing in the first forming step is not released.

The first formation step may be performed under a pressure of 0.01 kgf/cm² or more and 10 kgf/cm² or less, and the second formation step may be performed under a pressure of 1 kgf/cm² or more and 10 kgf/cm² or less.

The second formation step may be performed under a pressure higher than the pressure of the first formation step.

The second formation step may be performed for a time period of 0.5 hours or more to 5 hours or less.

The first temperature may be a temperature of 10 degrees Celsius or more and 50 degrees Celsius or less, and the second temperature may be a temperature of 30 degrees Celsius or more to 100 degrees Celsius or less.

A degassing step may be further performed after the aging step.

According to another embodiment of the present disclosure, there is provided a secondary battery comprising a battery cell manufactured by the above-mentioned battery cell manufacturing method.

### [Advantageous Effects]

A battery cell manufacturing method according to embodiments of the present disclosure can prevent a bending phenomenon of the battery cell without requiring a separate manual press process.

The effects of the present disclosure are not limited to the effects mentioned above and additional other effects not mentioned herein will be clearly understood from the description and the accompanying drawings by those skilled in the art.

### [BRIEF DESCRIPTION OF THE DRAWING]

FIG. 1 is a flowchart showing a battery cell manufacturing method according to an embodiment of the present disclosure.
FIG. 2 is a perspective view showing a battery cell assembled in the battery cell assembling step of FIG. 1.
FIG. 3 is an exploded perspective view of the battery cell of FIG. 2.
FIG. 4 is a flowchart showing a battery cell manufacturing method according to Comparative Example.
FIG. 5(a) shows the results relating to Comparative Example according to Experimental Example 1, and (b) shows the results relating to Example according to Experimental Example 1.
FIG. 6 shows the results relating to Comparative Example and Example according to Experimental Example 2.
FIG. 7(a) shows the results relating to a negative electrode of Comparative Example according to Experimental Example 3, and (b) shows the results relating to a negative electrode of Example according to Experimental Example 3.
FIG. 8(a) shows the results relating to a positive electrode of Comparative Example according to Experimental Example 3, and (b) shows the results relating to a positive electrode of Example according to Experimental Example 3.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be embodied in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Further, throughout the specification, when a portion is referred to as "including" a certain component, it means that the portion can further include other components, without excluding the other components, unless otherwise stated.

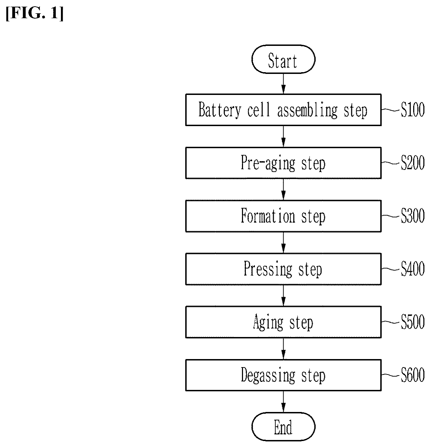

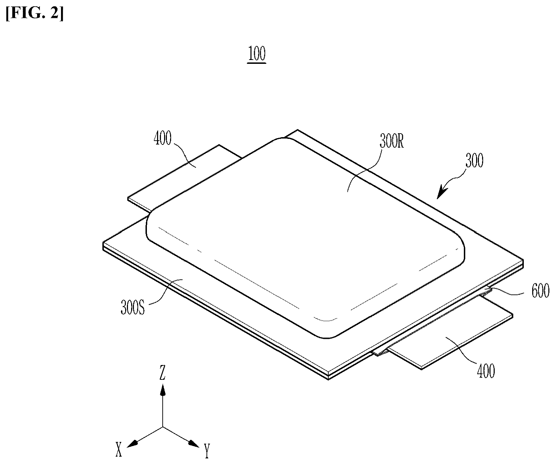

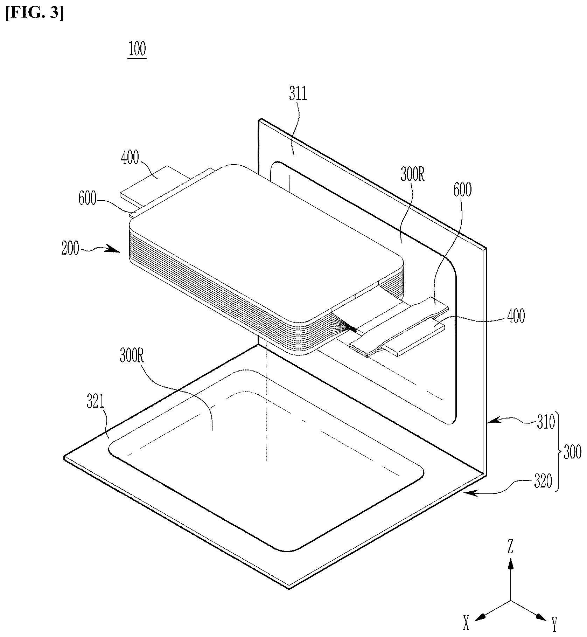

FIG. 1 is a flowchart showing a battery cell manufacturing method according to an embodiment of the present disclosure. FIG. 2 is a perspective view showing a battery cell assembled in the battery cell assembling step of FIG. 1. FIG. 3 is an exploded perspective view of the battery cell of FIG. 2.

Referring to FIGS. 1 and 2, a battery cell manufacturing method according to an embodiment of the present disclosure comprises: a battery cell assembling step S100 of mounting an electrode assembly 200 in a housing section 300R of a battery case 300, with the electrode assembly comprising a positive electrode, a positive electrode, and a separator interposed between the positive electrode and the negative electrode; a pre-aging step S200 of storing the battery cell 100 at a first temperature; a first formation step S300 of charging and discharging the battery cell 100; a second formation step S400 of only pressing the charged and discharged battery cell 100; and an aging step S500 of storing the pressed battery cell 100 at a second temperature, wherein the second temperature may be in a range equal to or higher than the first temperature.

Referring to FIGS. 2 and 3, the battery cell 100 assembled in the battery cell assembling step S100 is a pouch-type battery cell, and includes an electrode assembly 200 inside a battery case 300. Further, the battery cell 100 is structured such that electrode leads 400 connected to the electrode tabs of the electrode assembly 200 are exposed to the outside, and lead films 600 are attached to the upper and lower parts of the electrode leads 400.

The electrode assembly 200 includes a positive electrode, a negative electrode, and a separator. More specifically, the electrode assembly 200 may be configured such that the positive electrode and the negative electrode are sequentially stacked with the separator being interposed therebetween and are insulated from each other. Here, the electrode assembly 200 may be a stack-type electrode assembly or a stack/folding type electrode assembly. However, the shape of the electrode assembly 200 is not limited thereto, and can be included in the present embodiment as long as it is a shape of an electrode assembly including a positive electrode, a negative electrode, and a separator. In addition, the positive electrode, the negative electrode, and the separator may be made of materials that are generally included in a battery cell.

The electrode leads 400 may include positive electrode leads connected to the positive electrode tabs (not shown) of the electrode assembly 200 and negative electrode leads connected to the negative electrode tabs (not shown) of the electrode assembly 200. However, as shown in FIG. 2, the position of the electrode lead 400 is not limited to being located at both ends of the electrode assembly 200, and the positive electrode lead and the negative electrode lead may be located together at one end of the electrode assembly 200.

In the battery cell 100 assembled in the battery cell assembling step S100, the electrolyte may be injected into the battery case 300 in a state where the electrode assembly 200 is mounted in the concave-shaped housing section 300R formed in the battery case 300. Further, a first outer peripheral surface 311 formed on the upper surface 310 of the battery case 300 and a second outer peripheral surface 321 formed on the lower surface 320 of the battery case 300 can be thermally fused to each other to form a sealing section 300S. However, the sealing section 300S in the battery cell assembling step S100 can be in a temporarily sealed state, and when a degassing step S600 described below is performed, the sealing of the battery cell 100 is released again and then the re-sealed section 300S may be formed.

Here, the electrolyte may include, but is not limited to, an organic liquid electrolyte, an inorganic liquid electrolyte, a solid polymer electrolyte, a gel-type polymer electrolyte, a solid inorganic electrolyte, a molten-type inorganic electrolyte, and the like, all of which can be used in the manufacturing of a lithium secondary battery.

Specifically, the electrolyte may include an organic solvent and a lithium salt. The organic solvent can be used without particular limitation as long as it may serve as a medium through which ions involved in an electrochemical reaction of a battery may move. The lithium salt can be used without particular limitation as long as it is a compound capable of providing lithium ions used in a lithium secondary battery.

Referring to FIG. 1, the pre-aging step S200 may be a step of storing the battery cell 100 assembled in the battery cell assembling step S100 at a first temperature. More specifically, the pre-aging step S200 may be a step of storing the battery cell 100 at a temperature of 10 degrees Celsius or more to 50 degrees Celsius or less, a temperature of 15 degrees Celsius or more to 40 degrees Celsius or less, or a temperature of 20 degrees Celsius or more to 30 degrees Celsius or less. In addition, the pre-aging step S200 may be a step of storing the battery cell 100 at a first temperature range for a time period of 24 hours or more to 96 hours or less, a time period of 36 hours or more to 90 hours or less, or a time period of 48 hours or more to 84 hours or less.

Referring to FIG. 1, the first formation step S300 may be a step of charging and discharging the battery cell 100 subjected to the pre-aging step S200 in a predetermined SOC (state of charge) range to activate the battery cell 100. As an example, the first formation step S300 may be a step of charging in a range of 20% or more to 100% or less, a range of 30% or more to 100% or less, a range of 50% or more to 100% or less, or a range of 80% or more to 100% or less. As an example, the first formation step S300 may be a step of discharging in a range of 50% or less to 0% or more, a range of 40% or less to 0% or more, a range of 30% or less to 0% or more, or a range of 20% or less to 0% or more. However, the charging/discharging conditions of the first formation step S300 are not limited thereto, and other charging/discharging conditions of the first formation step S300 may be set to appropriate ranges or conditions depending on the electrode active material, battery type, battery characteristics, etc.

The first formation step S300 may be performed in a state where the battery cell 100 is pressed. As an example, the first formation step S300 may be a jig formation performed in a state where the jig presses the upper and lower parts of the battery cell 100.

More specifically, the first formation step S300 may be performed in a state where a pressure of 0.01 kgf/cm² or more to 10 kgf/cm², or 0.02 kgf/cm² or more to 5 kgf/cm² or less is applied to the battery cell 100. Further, the first formation step S300 may be performed at a high temperature. As an example, the first formation step S300 may be performed at a temperature of 30 degrees Celsius or more to 80 degrees Celsius or less, 40 degrees Celsius or more to 70 degrees Celsius or less, or 50 degrees Celsius or more to 60 degrees Celsius or less.

Referring to FIG. 1, in the battery cell manufacturing method according to the present embodiment, the second formation step S400 may be a step of pressing the battery cell 100 subjected to the first formation step S300 in a predetermined temperature and pressure range.

Referring to FIG. 1, the second formation step S400 may be performed in a range equal to or higher than temperature and pressure conditions of the first formation step S300. More specifically, the second formation step S400 may be performed at a temperature of 30 degrees Celsius or more to 100 degrees Celsius or less, a temperature of 40 degrees Celsius or more to 90 degrees Celsius or less, or a temperature of 50 degrees Celsius or more to 80 degrees Celsius or less. Further, the second formation step S400 may be performed under a pressure of 1 kgf/cm² or more to 10 kgf/cm² or less, a pressure of 1.5 kgf/cm² or more to 7 kgf/cm² or less, or a pressure of 2 kgf/cm² or more to 4 kgf/cm² or less. Further, the second formation step S400 may be performed in the above temperature and pressure ranges for a time period of 0.5 hours or more to 5 hours or less.

Thereby, the second formation step S400 is performed after the first formation step S300 is performed, and thus may not take into account the degree of wet adhesive force at an interface between the components in the first formation step S300, and the temperature and pressure ranges in the second formation step S400 may be set relatively higher than those in the first formation step S300. In particular, in the second formation step S400, the wet adhesive force at an interface between the components of the battery cell 100 can be increased by pressing the battery cells 100 that have been sufficiently activated in the first formation step S300 in a relatively high temperature and pressure range, thereby effectively preventing a cell bending phenomenon of the battery cells 100.

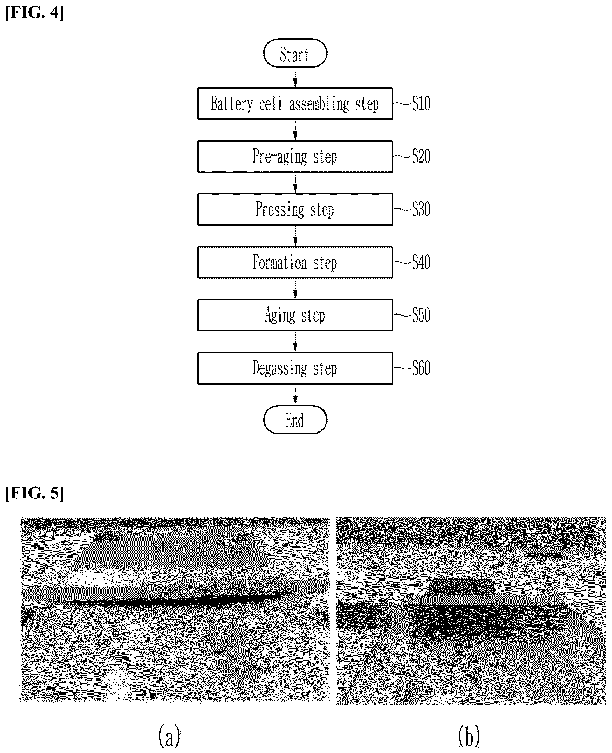

Unlike the same, in case where the pressing step S30 is performed before the formation step S40 in the same manner as in the battery cell manufacturing method according to Comparative Example (see FIG. 4), as the wet adhesive force at an interface between the components is increased by the pressing step S30, there is a problem that the porous space is not sufficiently secured at the interface between the components of the battery cell 100 in the formation step S40. If the porous space is not sufficiently secured at the interface between the components in the formation step S40 in this manner, there are problems that the wettability deterioration, lithium (Li) precipitation and dog-bone phenomenon of the electrode are intensified. In this manner, in the case of a battery cell manufacturing method as in Comparative Example, the temperature and pressure ranges in the pressing step S30 has no choice but to be set relatively low in consideration of the wet adhesive force at the interface between the components of the battery cell 100 in the formation step S40, and it is difficult to effectively prevent the cell bending phenomenon of the battery cell 100.

Further, the second formation step S400 may be performed in a state where the pressing in the first forming step S300 is not released. In other words, the second formation step S400 may be a step in which the battery cells 100 in the first formation step S300 are maintained in a pressed state without performing separate charge and discharge unlike the first formation step S300.

Thereby, in the battery cell manufacturing method according to the present embodiment, the second formation step S400 has the advantage of being able to prevent the process from becoming complicated due to the addition of the second formation step S400 and also maintain the pressed environment for the battery cell 100 constant, in that it uses the pressing equipment in the first formation step S300 in a similar manner.

Referring to FIG. 1, the aging step S500 may be a step of storing the battery cell 100 pressed in the second formation step S400 at a second temperature, and the second temperature may be in a range equal to or higher than the first temperature. More specifically, the aging step S500 may be a step of storing the battery cell 100 at a temperature of 40 degrees Celsius or more to 80 degrees Celsius or less, a temperature of 50 degrees Celsius or more to 70 degrees Celsius or less, or a temperature of 55 degrees Celsius or more to 65 degrees Celsius or less. Further, the aging step S500 may be a step of storing the battery cell 100 in the range of the second temperature for a time period of 12 hours or more to 48 hours or less, or a time period of 18 hours or more to 36 hours or less.

Thereby, in the battery cell manufacturing method according to the present embodiment, as the aging step S500 is performed in the above-mentioned temperature and time ranges, the electrolyte is evenly distributed inside the battery cell 100, and the SEI film can be formed more stably.

Referring to FIG. 1, in the battery cell manufacturing method according to the present embodiment, a degassing step S600 may be further performed after the aging step S500. More specifically, the degassing step S600 may be a step of releasing the sealing of the sealing section 300S formed in the above-mentioned battery cell assembling step S100, and thus discharging gas generated inside the battery cell 100 to the outside. Further, the battery case 300 opened in the degassing step S600 allows the sealing section 300S to be formed again, thereby sealing the battery cell 100.

FIG. 4 is a flowchart showing a battery cell manufacturing method according to Comparative Example.

Referring to FIG. 4, the battery cell manufacturing method according to Comparative Example includes a battery cell assembling step S10; a pre-aging step S20; a pressing step S30; a formation step S40; an aging step S50; and a degassing step S60. Here, the battery cell manufacturing method according to Comparative Example can be described mostly in the same way as the battery cell manufacturing method according to an embodiment of the present disclosure, with the difference being that the pressing step S30 is performed before the formation step S40, and this difference will be mainly described.

Referring to FIG. 4, unlike FIG. 1, the pressing step S30 can be performed before the formation step S40. At this time, the pressing step S30 may be a step of pressing the battery cell 100 subjected to the pre-aging step S20.

In particular, the pressing step S30 may press the battery cell 100 in accordance with a predetermined temperature and pressure range, thereby increasing the wet adhesive force at an interface between the components of the battery cell 100 and preventing the cell bending phenomenon of the battery cell 100.

However, as mentioned above, in the battery cell manufacturing method according to Comparative Example, as the pressing step S30 is performed before the formation step S40, the wet adhesive force at an interface between the components of the battery cell 100 is relatively increased by the pressing step S30. In this manner, when the formation step S40 is performed in a state where the wet adhesive force at an interface between the components of the battery cell 100 is relatively high, the porous space is not sufficiently secured at an interface between the components in the formation step S40, so that the wettability deterioration, lithium (Li) precipitation and dog-bone phenomenon of the electrode may be intensified

In this manner, referring to FIG. 4, in the case of a battery cell manufacturing method as in Comparative Example, the temperature and pressure range in the pressing step S30 has no choice but to be set relatively low in consideration of the wet adhesive force at an interface between the components of the battery cell 100 in the formation step S40, and it is difficult to effectively prevent the cell bending phenomenon of the battery cell 100.

Unlike the same, referring to FIGS. 1 to 3, in the battery cell manufacturing method according to the present embodiment, since the second formation step S400 is performed after the first formation step S300, there is no need to consider the wet adhesive force at an interface between the components of the battery cell 100 in the first formation step S300, and the temperature and pressure ranges in the second formation step S400 can be set to the extent that can effectively prevent the cell bending phenomenon of the battery cell 100. That is, since the second formation step S400 is performed after the first formation step S300, it is possible to prevent the wettability deterioration, lithium (Li) precipitation, and dog-bone phenomenon of the electrode while effectively preventing a cell bending phenomenon that may occur in the first formation step S300.

A secondary battery according to another embodiment of the present disclosure may include a battery cell manufactured by the above-mentioned battery cell manufacturing method. Further, the battery cell may be included in a battery module in a form in which a plurality of battery cells are stacked, and one or more of the battery modules may be packaged in a pack case to form a battery pack. Further, the battery cell may be directly packaged in a pack case in a form in which a plurality of battery cells are stacked to form a battery pack, and some of the components of the battery module unit may be omitted.

The aforementioned battery pack may be applied to various devices. Such devices may be applied to transportation vehicles such as electric bicycles, electric vehicles, and hybrid vehicles, but the present disclosure is not limited thereto, and can be applied to various devices that can use a battery module and a battery pack including the same, and this also falls within the scope of the present disclosure.

Hereinafter, the present disclosure will be described with reference to more specific examples, but the following examples are for illustrative purposes only, and the scope of the present disclosure is not limited thereto.

### <Preparation Example>

LiNi1/3Mn1/3Co1/3O4, a conductive material (carbon black) and a binder (SBR/CMC, 70:30 weight ratio) were added to DI water in a weight ratio of 90: 5: 5, respectively, and mixed to prepare a positive electrode mixture. The prepared positive electrode mixture was coated onto a 20 *µ*m thick aluminum foil as a positive electrode current collector to a thickness of 60 *µ*m, and then dried to produce a positive electrode. A lithium metal thin film (thickness: 160 *µ*m) was used as the negative electrode.

A separator (polyethylene material separator, thickness: 20 *µ*m) was interposed between the negative electrode and the positive electrode to prepare a stack-type electrode assembly. Here, the electrode assembly was prepared by sequentially stacking and laminating the produced positive electrode/separator/negative electrode.

The prepared electrode assembly was located inside a pouch-type battery case, and then an electrolyte was injected to manufacture a temporarily sealed battery cell. Here, the electrolyte is an electrolyte in which 1M LiPF6 was dissolved in an organic solvent in which ethyl carbonate(EC) and ethyl methyl carbonate(EMC) were mixed in a compositional ratio of 3:7 (volume ratio).

### <Example>

A pre-aging step of storing the battery cell manufactured according to Preparation Example at a temperature of 25 degrees Celsius for 72 hours was performed.

Then, the first formation step of charging and discharging the battery cell subjected to the pre-aging step at a C-rate of 0.2 to 1.0 and an SOC of 60% was performed. Here, the first formation step is a jig formation step in which jig pressing of the battery cell is simultaneously performed at a temperature of 55 degrees Celsius under a pressure of 0.2 kgf/cm² to 5 kgf/cm².

Then, the second formation step of pressing the battery cell subjected to the first formation step at a temperature of 70 degrees Celsius under a pressure of 3 kgf/cm² for 1 hour was performed.

Then, the aging step of storing the battery cell subjected to the second formation step at a temperature of 60 degrees Celsius for 24 hours was performed.

Then, the degassing step of releasing the sealing of the battery cell was performed, and then the battery cell was sealed again to manufacture a battery cell.

### <Comparative Example>

The battery cell of Comparative Example was manufactured in the same manner as in Example, except that a pressing step of pressing the battery cell subjected to the pre-aging step was performed, an aging step of storing the battery cell subjected to the pressing step was performed, and a further pressing step was performed separately through a manual operation before the degassing step after the aging step.

### <Experimental Example 1_Confirm whether or not the battery cell is bent>

A part of the battery cells manufactured in Example and Comparative Example was enlarged and photographed, and the results are shown in FIG. 5. FIG. 5(a) shows the results relating to Comparative Example according to Experimental Example 1, and (b) shows the results relating to Example according to Experimental Example 1.

Referring to FIG. 5(a), it can be confirmed that the cell bending phenomenon occurs in the battery cell manufactured in Comparative Example, in that the center of the battery cell has a shape bent toward the bottom. Unlike the same, referring to FIG. 5(b), it can be confirmed that the battery cell manufactured in Example prevents or relatively suppresses occurrence of the cell bending phenomenon, in that the center of the battery cell is not bent toward the bottom.

Therefore, when checking whether or not the battery cell of Example and Comparative Example is bent based on the outer surface thereof as in Experimental Example 1, it can be confirmed that the battery cell according to Example prevents or relatively suppresses occurrence of the cell bending phenomenon unlike Comparative Example.

### <Experimental Example 2_Confirmation of the degree of bending of the battery cell>

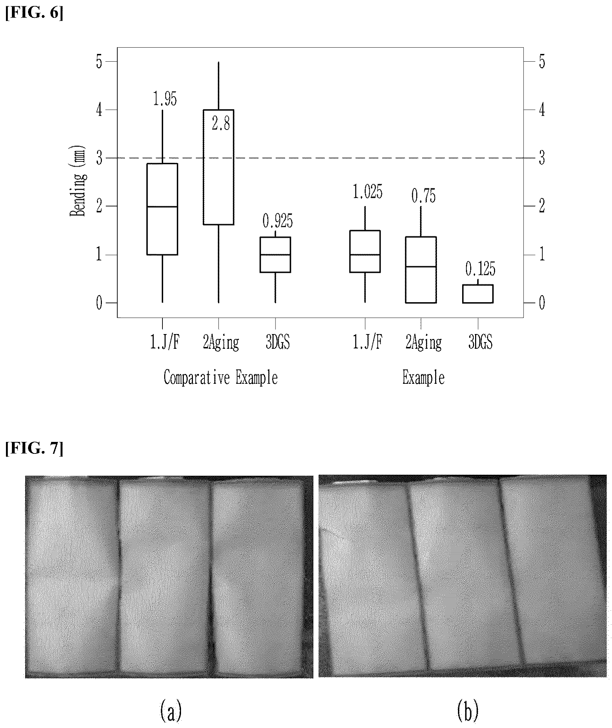

Based on the outer surface of the battery cell manufactured in Example and Comparative Example, the degree of bending of the battery cell was calculated, and the results were shown in FIG. 6. FIG. 6 shows the results relating to Comparative Example and Example according to Experimental Example 2.

Referring to FIG. 6, it can be confirmed that in Comparative Example, when the pressing step is performed before the formation step (J/F), the degree of bending of the battery cell is relatively high in that the degree of bending in the formation step (J/F) and the aging step (Aging) is 1.95 mm and 2.8 mm on average. In particular, it can be confirmed that in Comparative Example, the bending degree is relatively particularly high in that the degree of bending of the battery cell in the aging step (Aging) is 2.8 mm on average, and the maximum value is 4 mm. That is, in the case of Comparative Example, it can be confirmed that after the formation step (J/F) and the aging step (Aging) are performed, a uniform wet adhesive force is not formed at the interface between the negative electrode and the separator and/or the interface between the positive electrode and the separator.

Further, it can be confirmed that if an additional pressing process is performed through a separate manual operation before the degassing step (DGS), the degree of bending is reduced to an average of 0.925 mm in the degassing step (DGS), as shown in FIG. 6. However, in this case, there is a problem that a considerable amount of process time is required and that it involves a risk of damaging the appearance of the battery cell.

In contrast, referring to FIG. 6, it can be confirmed that when pressing of the battery cell is performed through the second formation step after the first formation step (J/F) and before the aging step (Aging) as in Example, the degree of bending of the battery cell is relatively low, in that the degree of bending in the first formation step (J/F) and the aging step (Aging) is 1.025 mm and 0.75 mm on average. That is, in the case of Example, it can be confirmed that after the first formation step (J/F) and the aging step (Aging) are performed, a uniform wet adhesive force is sufficiently formed at the interface between the negative electrode and the separator and/or the interface between the positive electrode and the separator.

Further, in the subsequent degassing step(DGS), it can be confirmed that the degree of bending of the battery cell is lower, in that the degree of bending of the battery cell is 0.125 mm on average. In particular, in the case of Example, it can be confirmed that the degree of bending of the battery cell is sufficiently smaller even without performing an additional press process through a separate manual operation as in Comparative Example. That is, Example can omit the additional press process through a separate manual operation unlike Comparative Example, thereby shortening the process time and preventing the risk of damaging the appearance of the battery cell.

Thereby, when the degree of bending is confirmed based on the outer surface of the battery cell of Example and Comparative Example as in Experimental Example 2, it can be confirmed that the battery cell manufactured in Example prevents or relatively suppresses occurrence of the cell bending phenomenon unlike Comparative Example, even without an additional press process through a separate manual operation.

### <Experimental Example 3_ Confirmation of the occurrence of lithium(Li) precipitation and dog-bone phenomenon in the electrode>

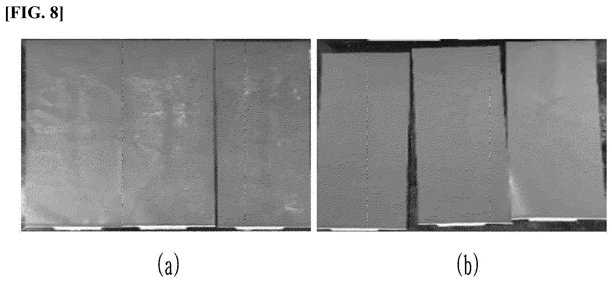

After disassembling the battery cells manufactured in Example and Comparative Example, the occurrence of lithium (Li) precipitation and dog-bone phenomenon in the electrode was confirmed based on the positive electrode and the negative electrode, and the results are shown in FIGS. 7 and 8. FIG. 7(a) shows the results relating to a negative electrode of Comparative Example according to Experimental Example 3, and (b) shows the results relating to a negative electrode of Example according to Experimental Example 3. FIG. 8(a) shows the results relating to a positive electrode of Comparative Example according to Experimental Example 3, and (b) shows the results relating to a positive electrode of Example according to Experimental Example 3.

Referring to FIG. 7(a) and FIG. 7(b), it can be confirmed that in the battery cell manufactured in Comparative Example, in the case of the negative electrode, there is not significant difference from Example.

In contrast, referring to FIG. 8(a) and FIG. 8(b), it can be confirmed that in the battery cell manufactured in Comparative Example, in the case of the positive electrode, a dog-bone-like shape appears on the surface of the positive elect unlike Example. In contrast, in the battery cell manufactured in Example, it can be confirmed that in the case of the positive electrode, no separate shape appears on the surface of the positive electrode unlike Comparative Example.

Accordingly, when the occurrence of Li precipitation and dog-bone phenomenon was confirmed based on the positive electrode and the negative electrode inside the battery cells of Example and Comparative Example as in Experimental Example 3, it can be confirmed that the battery cell according to Example prevents or relatively suppresses occurrence of Li precipitation and dog-bone phenomenon unlike Comparative Example.

That is, when the pressing step is performed before the first formation step (J/F) as in Comparative Example, it can be confirmed that the levels of the adhesive force at an interface between the negative electrode and the separator and the wet adhesive force at an interface between the positive electrode and the separator are different based on whether or not Li precipitation and the dog-bone phenomenon occur. Further, it can be confirmed that due to this difference in the levels of the wet adhesive force, Comparative Example causes the bending of the battery cell in the aging step that is performed after the formation step.

In contrast, when pressing of the battery cell is performed through the second formation step after the first formation step(J/F) and before the aging step(Aging) as in Example, it can be confirmed that based on whether or not Li precipitation and dog-bone phenomenon occur, the levels of the wet adhesive force at an interface between the negative electrode and the separator and the wet adhesive force at an interface between the positive electrode and the separator are similar. In addition, it can be confirmed that in Example, sufficient wet adhesive force is exhibited at an interface between the negative electrode and the separator and an interface between the positive electrode and the separator, so that bending of the battery cell does not occur in the aging step performed after the second formation step.

Although preferred embodiments of the present disclosure have been shown and described above, the scope of the present disclosure is not limited thereto, and numerous other variations and modifications can be made by those skilled in the art using the basic principles of the invention defined in the appended claims, which also falls within the spirit and scope of the invention.

## Claims

1. A battery cell manufacturing method, comprising:
a battery cell assembling step of mounting an electrode assembly in a housing section of a battery case, with the electrode assembly comprising a positive electrode, a positive electrode, and a separator interposed between the positive electrode and the negative electrode;
a pre-aging step of storing the battery cell at a first temperature;
a first formation step of charging and discharging the battery cell;
a second formation step of only pressing the charged and discharged battery cell; and
an aging step of storing the pressed battery cell at a second temperature,
wherein the second temperature is in a range equal to or higher than the first temperature.

2. The battery cell manufacturing method according to claim 1,
wherein the second formation step is performed under a pressure of 1 kgf/cm² or more and 10 kgf/cm² or less.

3. The battery cell manufacturing method according to claim 1,
wherein the second formation step is performed at a temperature equal to or higher than the temperature of the first formation step.

4. The battery cell manufacturing method according to claim 3,
wherein the first formation step and the second formation step are performed at a temperature of 30 degrees Celsius or more and 80 degrees Celsius or less.

5. The battery cell manufacturing method according to claim 4,
wherein the second formation step is performed at a temperature higher than that of the first formation step.

6. The battery cell manufacturing method according to claim 1,
wherein the first formation step is performed in a state where the battery cell is pressed, and
the second formation step is performed under a pressure equal to or higher than the pressure of the first formation step.

7. The battery cell manufacturing method according to claim 6,
wherein the first formation step is performed in a state where the battery cell is located between a pair of jigs, and the upper and lower parts of the battery cell are pressed by the pair of jigs.

8. The battery cell manufacturing method according to claim 7,
wherein the second formation step is performed in a state where the pressing in the first forming step is not released.

9. The battery cell manufacturing method according to claim 6,
wherein the first formation step is performed under a pressure of 0.01 kgf/cm² or more and 10 kgf/cm² or less, and
the second formation step is performed under a pressure of 1 kgf/cm² or more and 10 kgf/cm² or less.

10. The battery cell manufacturing method according to claim 9,
wherein the second formation step is performed under a pressure higher than the pressure of the first formation step.

11. The battery cell manufacturing method according to claim 1,
wherein the second formation step is performed for a time period of 0.5 hours or more to 5 hours or less.

12. The battery cell manufacturing method according to claim 1,
wherein the first temperature is a temperature of 10 degrees Celsius or more and 50 degrees Celsius or less, and
the second temperature is a temperature of 30 degrees Celsius or more to 100 degrees Celsius or less.

13. The battery cell manufacturing method according to claim 1,
wherein a degassing step is further performed after the aging step.

14. A secondary battery comprising a battery cell manufactured by the battery cell manufacturing method of claim 1.
